(19) **Europäisches Patentamt European Patent Office Office européen des brevets**

(11) **EP 1 756 987 B1**

(12) **FASCICULE DE BREVET EUROPEEN**

(45) Date de publication et mention
de la délivrance du brevet:
**02.04.2008 Bulletin 2008/14**

(51) Int Cl.:
***H04J 3/06*** (2006.01)

(21) Numéro de dépôt: **05743113.2**

(86) Numéro de dépôt international:
**PCT/EP2005/052056**

(22) Date de dépôt: **04.05.2005**

(87) Numéro de publication internationale:
**WO 2005/117311 (08.12.2005 Gazette 2005/49)**

(54) **PROCEDE ET SYSTEME DE SYNCHRONISATION DISTRIBUEE**

VERFAHREN UND SYSTEM ZUR VERTEILTEN SYNCHRONISATION

DISTRIBUTED SYNCHRONIZATION METHOD AND SYSTEM

(84) Etats contractants désignés:
**AT BE BG CH CY CZ DE DK EE ES FI FR GB GR
HU IE IS IT LI LT LU MC NL PL PT RO SE SI SK TR**

(30) Priorité: **28.05.2004 FR 0405809**

(43) Date de publication de la demande:
**28.02.2007 Bulletin 2007/09**

(73) Titulaire: **THALES**
**92200 Neuilly sur Seine (FR)**

(72) Inventeurs:
• **THILL, Jean-Claude; THALES Intellectual
Property
F-94117 CX Arcueil (FR)**

• **FACHAU, Laurent; THALES Intellectual Property
F-94117 CX Arcueil (FR)**

(74) Mandataire: **Dudouit, Isabelle
MARKS & CLERK France
Conseil en Propriété Industrielle
31-33 Avenue Aristide Briand
94117 Arcueil Cedex (FR)**

(56) Documents cités:
**US-A1- 2001 022 823      US-A1- 2004 005 902**

## Description

L'invention concerne un procédé et un système de synchronisation distribuée.

Elle s'applique par exemple dans les réseaux ad Hoc. Elle est aussi utilisée dans les réseaux sans fil de type Large Scale Wireless Network avec accès ou transmission demandant une synchronisation globale.

Elle s'applique pour des réseaux radio.

De nombreuses procédures de synchronisation dans les réseaux radio requièrent une référence temporelle commune et précise à chaque noeud de ce réseau. Dans la description, on désigne par noeud ou « station » toute entité du réseau, implémentée en matériel ou logiciel qui peut être le point d'entrée ou le point de sortie ( fin ) d'un échange ou de transmission d'informations entre stations.

La garantie des délais de transmission, la possibilité de services de diffusion (en anglo-saxon broadcast) dans les réseaux multicanaux en présence de terminaux cachés, conduisent à coordonner l'accès de plusieurs stations et à avoir une politique de pré-allocation des ressources sous la forme de tranche de temps et de fréquences. Ceci s'applique entre autre et de façon non exclusive aux méthodes d'accès en TDMA dynamiques (TDMA ou en anglo-saxon Time Division Multiple Access), dont un exemple parmi d'autres est le mode Mesh de la norme IEEE 802.16A.

Dans le même ordre d'idée, l'emploi d'antennes directives dans un réseau ad hoc conduit souvent à coordonner les transmissions, donc à utiliser une référence de temps commune.

Les réseaux, par ailleurs, peuvent utiliser des techniques de transmissions de type saut de fréquences avec des lois transec (lois pour rendre le changement de fréquences pseudoaléatoire et assurer la protection de la transmission) dépendant de l'heure. Là, également, une référence horaire commune est requise.

Cette référence horaire commune est plus ou moins précise selon le système. Le manque de précision conduit à ajouter des temps de garde ou de synchro qui deviennent rapidement intolérables vis à vis des performances du réseau en terme de délais ou de capacité de transmission.

Différentes procédures de « synchronisation distribuée dans les réseaux ad hoc » sont actuellement connues de l'art antérieur.

En dehors des solutions utilisant une référence externe commune comme le GPS (système de positionnement global ou en anglo-saxon Global Positionning System) mais qui dépendent alors de la disponibilité de ce dernier, la méthode la plus fréquente est l'utilisation d'arbre de synchronisation. Une station est par exemple choisie comme référence horaire ou maître de synchronisation. Les autres stations se synchronisent progressivement par rapport à cette station de référence, en construisant de façon décentralisée un arbre de synchronisation. Les stations voisines de la station de référence se synchronisent sur cette dernière, puis sur les stations situées à deux bonds qui se synchronisent en sélectionnant une station à un bond comme parent et ainsi de suite.

Cette méthode présente un certain nombre d'inconvénients dans le cadre des réseaux mobiles. En effet, si le réseau se fragmente, il devient nécessaire de choisir dans la partie ne contenant pas la station de référence une autre station de référence. Si les réseaux fusionnent à nouveau, les deux stations de référence ne peuvent être maintenues. Par ailleurs, même si le réseau reste connecté, la position des stations évoluant, l'arbre de synchronisation doit être modifié, sans créer de boucle locale. Dans le cas où la station de référence est détruite, il faut détecter cette situation (donc avoir une procédure de maintien de présence de la station non sensible aux boucles de type comptage à l'infini), puis procéder à l'élection décentralisée d'une nouvelle station. Ceci nécessite des procédures assez délicates et peu réactives.

D'autres méthodes étudiées dans l'art antérieur sont basées sur une pondération des heures des voisins (stations voisines). Dans certaines conditions choisies de la matrice de pondération, le système converge. Cette convergence est toutefois lente et peu adaptée à des réseaux mobiles.

La demande de brevet US 2004/0005902 concerne un système et une méthode pour corriger les dérives d'une horloge et maintenir la synchronisation des horloges dans un réseau sans fil.

La demande de brevet US 2001/02283 divulgue un procédé de synchronisation d'horloge interne dans un système de communications comprenant les étapes suivantes : l'extraction d'un motif temporel (time stamp) du signal reçu, la détermination de la différence entre le motif temporel et une valeur temporelle de l'horloge interne, la modification de l'horloge interne lorsque l'amplitude absolue de la différence dépasse une valeur seuil.

Le procédé et le système de synchronisation utilisent notamment les transmissions (échanges) entre les stations connectées par des liens principalement radio. Le procédé ne fait ni appel à une station de référence, ni à une référence externe dans les conditions de fonctionnement normal ; la synchronisation pouvant apparaître à n'importe quel moment (absence de maître).

L'invention concerne un procédé de synchronisation distribuée dans un réseau de communication comportant plusieurs stations échangeant entre elles des messages comportant au moins l'étape suivante :

    o insérer dans chaque message transmis par un émetteur d'une station un motif de synchronisation caractéristique de la référence horaire de l'émetteur et incluant l'heure d'émission du message,

et caractérisé en ce qu'il comporte au moins l'étape suivante

o mettre à jour la référence horaire d'une première station par la référence horaire d'un message reçu d'une deuxième station du réseau si et seulement si la référence horaire reçue est en avance sur la référence horaire de la première station, la mise à jour se faisant de la manière suivante :

- calculer la différence $\Delta X=T'a-Ta$ entre l'heure $T'a$ d'émission par la deuxième station du message reçu et l'heure $Ta$ de réception par la première station du même message,
- appliquer une correction $\Delta Y$ avec $0<\Delta Y<=\Delta X$ si l'heure $T'a$ d'émission est en avance d'une grandeur au moins $\tau$ avec $\Delta X>\tau>0$.

L'invention concerne aussi une station pour la synchronisation distribuée au sein d'un réseau comportant plusieurs stations échangeant entre elles des messages comprenant chacun un motif de synchronisation caractéristique de la référence horaire de la station émettrice du message et incluant l'heure d'émission du message ladite station comportant au moins l'élément suivant :

o Une horloge interne H pour fournir une référence horaire à la station,
o Un dispositif C_E/R pour recevoir des messages et ayant pour fonction de mesurer leur heure de réception et pour contrôler l'instant d'émission des messages,
o Un dispositif Co de correction de l'heure de l'horloge internne H, pour recevoir les motifs de synchronisation, le dispositif Co étant adapté à mettre à jour la référence horaire de l'horloge interne par la référence horaire d'un message reçu d'une autre station si et seulement si la référence horaire du message reçu est en avance sur la référence horaire de l'horloge interne H:

- en calculant la différence $\Delta X=T'a-Ta$ entre l'heure $T'a$ d'émission du message et l'heure $Ta$ de réception du message par la station, et
- en appliquant une correction $\Delta Y$ avec $0<\Delta Y<=\Delta X$ si l'heure $T'a$ d'émission est en avance d'une grandeur au moins $\tau$ avec $\Delta X>\tau>0$.

L'invention présente notamment les avantages suivants :
Le procédé ne fait pas appel à la désignation explicite d'une ou de plusieurs stations de référence et il est totalement distribué, c'est-à-dire basé sur des informations locales,
**[0019]** D'autres caractéristiques et avantages de la présente invention apparaîtront mieux à la lecture de la description d'un exemple de réalisation donné à titre illustratif et nullement limitatif annexé des figures qui représentent :

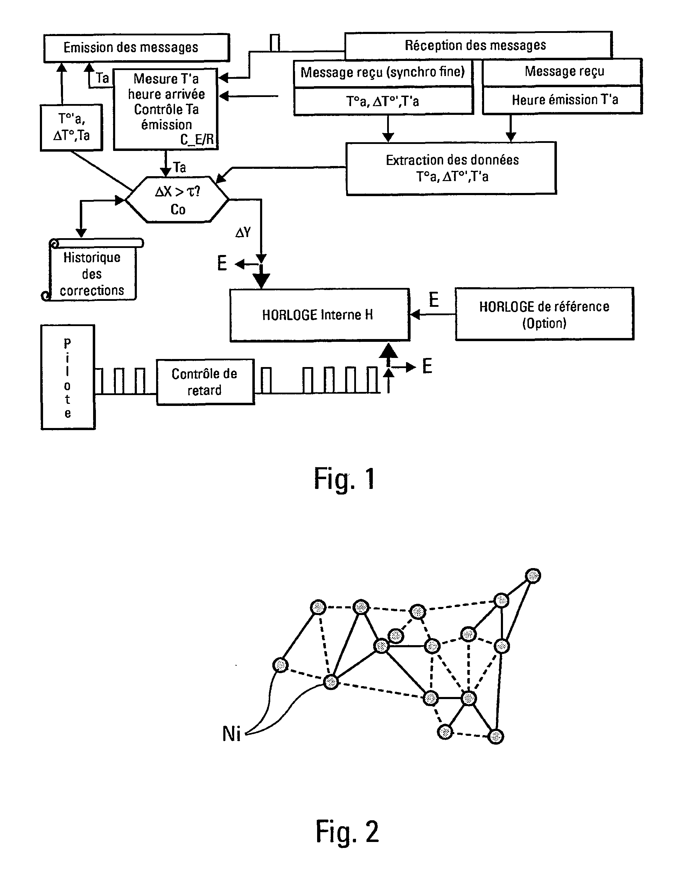

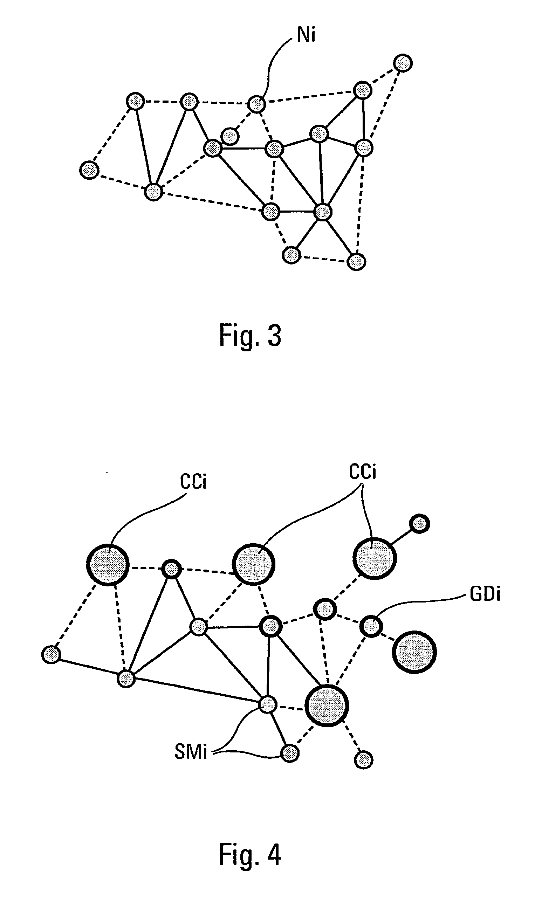

o La figure 1 un exemple d'architecture du système selon l'invention,
o La figure 2 un exemple de synchronisation grossière dans un réseau ad hoc,
o La figure 3 un exemple de synchronisation fine dans un réseau ad hoc,
o La figure 4 un exemple de système organisé en clusters.

Afin de mieux faire comprendre le principe mis en oeuvre par le procédé, la description qui suit est donnée dans le cadre d'un réseau comportant un ensemble de noeuds ou stations, mobiles ou non, interconnectés par des moyens de transmission radio. L'ensemble des noeuds forme par exemple un réseau connexe. Chaque noeud dispose d'une horloge interne et les horloges sont supposées ne pas être forcément synchronisées initialement et dériver dans le temps.
La figure 1 schématise un système de synchronisation selon l'invention. Le système est disposé au niveau d'une station ou d'un noeud Ni. Il comporte par exemple les éléments suivants :

o Une horloge interne H dont l'heure est contrôlée par un pilote et un dispositif de contrôle de retard optionnel (par exemple suppression de top pilote) de façon telle, que la dérive de l'heure soit toujours négative,
o Un dispositif C_E/R qui reçoit les messages et a notamment pour fonction de mesurer l'heure de réception et de contrôler l'instant d'émission des messages. Ce dispositif reçoit aussi les informations de l'horloge interne,
o Un dispositif de correction Co de l'heure H, fonction des mesures des temps d'arrivée et des temps d'émission des messages. Ce dispositif reçoit les informations horaires (T, $\Delta T$) transportées par les messages et calcule les données de synchronisation à transporter,
o Une horloge externe de référence en option.

Le fonctionnement du système diffère selon le schéma du réseau auquel il est appliqué dont certains exemples d'application sont donnés ci-après.
La description fait appel aux notations suivantes : les valeurs indicées « Z' » indiquent en principe les mesures et les calculs effectués dans la station distante et « Z » dans la station locale.
La figure 2 schématise un exemple de réseau ad hoc. Il comporte plusieurs noeuds ou stations reliés entre eux par des liens de communication homogènes ou non, désignés respectivement sur la figure par des trains pleins ou en pointillés. Les noeuds peuvent être mobiles ou non et comportent chacun une horloge interne. Les horloges sont supposées ne pas être forcément synchrones initialement et dériver dans le temps. Les liens de communication sont par exemple des liens Radio. L'ensemble de ces connexions forme par exemple un réseau connexe.

Le procédé synchronise les horloges de tous les noeuds au travers d'échanges entre une station (noeud) et les stations voisines connectées.

Le procédé suppose que les échanges de message entre stations s'effectuent de la manière suivante :

une station A qui reçoit une émission de la station B détermine l'heure d'émission de B (mesurée dans l'horloge B) et l'heure de réception du message dans son horloge (horloge A) Ceci est effectué par exemple de manière explicite lorsque le message émis par B contient son heure d'émission ou un autre indicateur. Ceci peut aussi être implicite lorsque le message est émis de façon synchronisée par rapport à une trame ou un instant convenu. L'instant d'arrivée du message dans la station A peut être mesuré par elle-même (A). L'écart entre l'instant d'émission et l'instant de réception est notamment du à l'écart des heures des horloges au moment de la transmission, à la dérive durant la transmission et au temps de propagation. Dans l'exemple de la figure 2, seule la synchronisation des horloges, au temps de propagation près, est prise en compte. Ceci est communément désigné par l'expression « synchronisation grossière ». Même si le système est initialement synchronisé, en absence de recalage, l'heure de chaque station va dériver et le réseau se désynchroniser.

Une première politique consiste à se recaler sur chaque message reçu. Si les échanges sont nombreux, le réseau peut rester synchronisé, mais le système est instable. L'heure de ce réseau va ralentir considérablement et de façon non contrôlée, du fait du temps de propagation qui retarde les transmissions. Le second effet de cette procédure est que si deux stations échangent localement de nombreux messages, là également il va se produire une dérive rapide locale non contrôlée et le groupe de stations va se trouver désynchronisé par rapport aux autres stations. Dans le cas où les horloges sont synchrones et ne dérivent pas, la procédure va entraîner une modification des horloges du fait des temps de propagation.

Pour résoudre le problème, chaque station du réseau se synchronise par exemple sur l'émission d'une station B, uniquement si l'émission reçue est en avance ; c'est-à-dire que si dans la station B le message est émis à $T_0$ (horloge de B) il est reçu à $T_0$-X (avec $X \geq 0$) dans l'horloge de A. Ceci implique que l'horloge de B est en avance, vu que les temps de propagation ne peuvent que retarder le message. On ne se synchronisera par exemple que si l'avance est supérieure à une valeur donnée pour tenir compte des erreurs de mesure.

Pour obtenir cette synchronisation, le procédé exécute par exemple les étapes suivantes :

o le dispositif Co calcule la différence $\Delta X = T'a-Ta$ entre l'heure d'émission T'a du message reçu et l'heure de réception Ta du même message,

o le procédé applique une correction $0 < \Delta Y \leq \Delta X$, si l'heure reçue d'émission est en avance d'une grandeur significative $\tau$ avec $\Delta X > \tau > 0$, par exemple $\Delta Y = \Delta X - \tau$.

Les stations A et B jouent des rôles symétriques.

Pourvu que chaque station émette régulièrement un message vers ses voisines, le réseau reste synchronisé, au temps de propagation près, la précision ne dépendant que du rythme d'émission de chaque station (de la dérive des horloges entre les transmissions). En particulier, le réseau ne dépend pas ou peu de la stabilité des liens (dans la mesure où le réseau reste globalement connexe) et de l'ordre dans lequel sont échangés les messages.

Selon ce procédé, l'heure d'une station du réseau ne peut pas dériver plus vite que la plus rapide des horloges du réseau et plus lentement que la plus lente. Autrement dit, si les horloges ont une dérive comprise entre +D et-D quand elles sont isolées, la dérive de l'heure de la station en réseau restera +/-D. En reprenant l'exemple précédent, si les horloges sont synchronisées et ne dérivent pas, la procédure de mise à l'heure proposée ne les fera pas dériver. Cette caractéristique de la méthode proposée est importante, car il est nécessaire de pouvoir estimer les dérives maximum entre des stations isolées ou des parties de réseaux isolées, pour pouvoir les re-synchroniser le plus rapidement possible. Ainsi, dans le cas où deux stations continuant à communiquer restent isolées pendant moins de X minutes, si le système tolère une dérive de X minutes sans synchronisation pour une station, les stations retourneront naturellement dans le réseau sans procédure particulière.

Sans sortir du cadre de l'invention, les étapes décrites ci-dessus au niveau des stations s'appliquent au niveau de groupe de stations. Si on a un ensemble de réseaux, on obtiendra une synchronisation de ce réseau en alignant le réseau A sur le réseau B si ce dernier est en avance.

Pour illustrer le principe par un exemple d'application dans la vie courante, on suppose une réunion ou chaque participant dispose de son heure et on veut que chaque participant dispose de la même heure. Chacun se déplace et compare son heure et adopte l'heure en avance. Clairement chacun va disposer à terme de la même heure. L'adoption de l'heure en retard par exemple, ne permettra pas la convergence si les temps de propagation ne sont pas négligeables, même si les horloges ne dérivent pas.

Synchronisation fine

Le procédé offre aussi la possibilité de corriger les temps de propagation. Cette variante désignée sous l'expression synchronisation fine représentée à la figure 3, utilise notamment une mesure aller-retour pour corriger les temps de propagations entre deux stations. Les liens de synchronisation fine sont représentés sur la figure par des traits en pointillés.

Pour cela, le procédé comporte par exemple les étapes classiques suivantes :

la station A mesure l'écart d'arrivée $T_1$ des messages avec B comme il a été décrit précédemment et B fait de même en mesurant l'écart d'arrivée $T_2$ avec les messages de A. Les stations s'échangent ces écarts

$$T_1 = \Delta H + \delta$$

$$T_2 = -\Delta H + \delta$$

Où $\Delta H$ correspond aux erreurs des horloges dans les stations et $\delta$ au temps de propagation entre les deux stations.

Le procédé proposé présente notamment les deux caractéristiques suivantes :

o Il ne présente aucune exigence de synchronisme dans les échanges entre les stations (sauf un rythme suffisant compatible de la dérive et de la précision recherchée)

o Il permet de limiter le nombre de voisins avec lesquels une station doit se synchroniser de façon fine, sans pour autant imposer un schéma stricte de ce graphe de synchronisation, lequel doit simplement maintenir la connexité du réseau.

Pour cela chaque station comporte une table permettant de mémoriser l'évolution des synchronisations (Table des corrections) faites au sein de la station.

En synchronisation fine, le dispositif Co de la station A calcule l'écart $T_1$=T'°a-T°a, l'écart entre l'heure d'émission par B et l'heure de réception d'un premier message reçu par A à T°a et émis à T'°a par B. $T_1$ est corrigé (grâce à la table des corrections) des corrections de l'horloge faites au niveau de la station A depuis l'heure de réception T°a et l'instant d'émission T'a d'un nouveau message de A vers B, pour obtenir $\Delta T'$=$T_1$ - corrections. L'instant d'émission T'a du nouveau message et l'écart $\Delta T'$ sont transmis (avec T'°a) vers la station distante concernée.

Le dispositif Co de la station B recevant à l'instant Ta (heure de réception du nouveau message ), les valeurs $\Delta T'$, T'°a et Ta de la station distante A, corrige $\Delta T'$ des corrections faites entre T'°a et Ta, pour obtenir $\Delta T_3$ et mesure $\Delta T_2$=T'a-Ta écart entre T'a et Ta. Si $\Delta T_2$-$\Delta T_3$ est supérieur à une valeur $\tau'$, avec $\tau'$ tendant vers zéro par exemple, le dispositif Co applique une correction, avec $\Delta T_2$-$\Delta T_3$ mesurant le double de l'avance de la station distante corrigée des temps de propagation.

Le principe utilisé est donc en ce sens similaire à la synchronisation grossière décrite précédemment, et chaque station adopte l'heure la plus avance entre elles et ses voisines. Ici cependant la connaissance de l'heure des voisines est plus précise du fait de la correction des temps de propagation.

Le procédé de synchronisation fine proposé est donc compatible de la synchronisation grossière, en ce sens qu'une station étant en synchronisation grossière ne va pas perturber les stations en synchronisation fine. En effet, une synchronisation grossière ne peut provoquer une modification que si son horloge est en avance et donc agit dans le même sens que la synchronisation fine.

La synchronisation se faisant entre stations, il n'est pas nécessaire de dérouler la procédure entre tous les liens, ni d'utiliser une structure figée comme un arbre de synchronisation. Il suffit que l'ensemble des liens retenus pour la synchronisation fine parcourt tous les noeuds du réseau de façon connexe comme dans l'exemple de structure donnée à la figure 3.

La figure 4 schématise un exemple de synchronisation fine qui s'applique à une architecture hiérarchisée. La synchronisation fine (liens représentés en pointillés sur la figure) peut s'appliquer entre chef de cluster CCi et station membre SMi du cluster, et entre chefs de cluster en incluant par ailleurs les gateway doubles GDi.

On note également que deux parties de réseaux initialement non connectées entre elles et déroulant une synchronisation fine telle qu'indiquée, reconstruise automatiquement un graphe de synchronisation en établissant un seul lien de synchronisation entre elles, sans qu'il soit nécessaire de modifier les graphes de synchronisation existants.

La dérive des réseaux ne dépendant que de la dérive des horloges, les temps de reconfiguration qui en général dépendent de l'écart des horloges des réseaux, sont bornés par ces dérives. Les phases de rupture de connectivité n'entraînent pas de dérive non contrôlée et sont donc moins critiques.

Prise en compte des stations en silence radio

Le procédé s'applique aussi pour des réseaux contenant des stations en silence radio, c'est-à-dire des stations capables de recevoir mais pas de transmettre.

Une station en silence radio adopte l'heure reçue d'une station voisine sans tenir compte du fait que la station est en avance ou en retard.

Lorsqu'il y a fractionnement du réseau et donc dérive relative des parties connexes du réseau, le procédé limite la synchronisation que si l'heure reçue n'est pas trop en retard sur l'heure locale. Ceci permet à la station de rester synchronisée sur le réseau le plus en avance. Le seuil est choisi par exemple en fonction de la dérive des horloges et des temps de propagation du système. Prise en compte des stations munies de références horaires externes de référence

On souhaite qu'un ensemble de stations connectées entre elles, et dont certaines disposent d'une référence externe de référence, par exemple des stations qui sont synchronisées sur un GPS, restent synchronisées sur cette heure de référence et que l'ensemble des stations soient synchronisées également sur cette heure. En dehors de l'heure de référence présente dans certaines stations, toutes les station sont pourvues d'un compteur horaire (heure interne) entretenu par un pilote qui envoie des tops régulièrement par exemple.

Le procédé comporte alors les étapes suivantes :

Les stations disposent comme précédemment d'une heure interne. Un pilote entretient cette horloge avec une certaine précision de +/A. Cette horloge est recalée à chaque réception de message par les messages en avance et parfois par des mesures aller retour pour corriger les temps de propagation, comme indiqué précédemment pour la synchronisation fine ou grossière. L'heure de référence externe de la station apparaît comme un message particulier de recalage, et obéit aux même critères qu'un message d'une station voisine.

Pour forcer le recalage sur cette heure externe, le pilote interne est conçu pour entraîner un retard naturel de l'horloge interne. Dans ces conditions, les stations disposant d'une heure de référence seront naturellement en avance sur les stations n'en disposant pas et l'heure de référence se propagera dans le réseau naturellement sans qu'aucune signalisation ne soit nécessaire.

Si on imagine que l'heure interne est entretenu sur les tops du pilote interne, le procédé supprime par exemple un top de temps en temps pour que la dérive soit, par exemple, de 0/-2A, au lieu de +A /-A. La façon de modifier l'émission des tops dépend par exemple de la structure du pilote.

Ce procédé s'applique aussi bien pour la synchronisation fine ou la synchronisation grossière.

Fusion de réseaux

Selon une variante de réalisation, le procédé selon l'invention permet de résoudre le problème de la synchronisation dans des parties de réseaux.

Il permet l'entretien automatique d'une heure commune en dépit des changements de topologie d'un réseau. Il a été indiqué précédemment comment les parties de réseaux disposant d'une heure externe de référence, par exemple une heure GPS se synchronisaient naturellement sur cette heure.

Le procédé selon l'invention ne fait aucune hypothèse sur la nature des moyens de communications qui lient les stations. Il peut s'agir de liens homogènes dans une gamme de fréquence, ou de différents moyens, et le procédé permet d'obtenir une heure commune précise.

La seule hypothèse est que les stations savent communiquer entre elles. Cependant cette mise à l'heure est souvent utilisée pour permettre aux stations de communiquer sur un moyen de communication donné, par exemple, le moyen de communication est un réseau TDMA (Time division multiple access) avec évasion de fréquence ou EVF.

En fait, ces systèmes de communication disposent de procédures internes pour détecter des stations qui ne seraient pas synchronisées avec une précision suffisante et permettre ainsi l'amorce de la mise en oeuvre du procédé indiqué. Cependant, une station qui cherche ainsi des parties voisines désynchronisées doit y consacrer une partie de ses ressources, non utilisables pour les échanges utiles. Ces procédures, qui ne font pas partie de l'invention, entraînent une consommation des capacités du système au détriment du trafic à écouler. Plus la capacité utilisée pour cette détection sera faible, plus long sera le temps de re synchronisation.

Il est clair que les parties disjointes d'un réseau, pourvu que chaque partie dispose d'une heure externe de référence, resteront synchronisées entre elles, même si tout échange cesse entre ces parties. Si par contre une partie connexe d'un réseau n'a aucune station disposant de cette heure externe, l'heure réseau de cette partie va dériver par rapport aux autres parties.

Le procédé selon l'invention permet de limiter la perte de capacité dans les réseaux disposant de référence horaire externe et de la concentrer sur ceux n'en disposant pas.

En effet, selon le principe de la synchronisation en avance et la méthode proposée, les réseaux avec heure externe de référence n'auront jamais à se synchroniser. On peut donc limiter la recherche des réseaux voisins aux réseaux ne disposant pas de cette référence. La consommation de ressource pour cette fonction sera limitée à des situations considérées comme dégradées ou dans les phases d'initialisation. Cependant pour mettre en oeuvre cette fonction, les stations du réseau doivent savoir qu'elles ne disposent pas de référence externe dans le réseau. Ceci demande un minimum de signalisation et peut entraîner des retards non négligeables, mais le temps de propagation de cette signalisation n'est pas critique, puisque non lié à la synchronisation assurée par ailleurs par la méthode proposée. La situation est très différente d'une station maître dont il faut rapidement détecter la perte sous peine de perte de synchronisation.

Un autre aspect est que le procédé assure naturellement une certaine immunité au rejeu de synchronisation. Par nature un rejeu est en retard et donc, compte tenu de la méthode, ne peut perturber le réseau où il est retransmis. Sur un réseau voisin, si ce dernier est en avance, il n'a pas d'effet. Si il est en retard le rejeu va provoquer l'avance, mais en fait va ainsi contribuer à la synchronisation du système puisque la méthode recherche les réseaux en avance.

Sans sortir du cadre de l'invention, le procédé peut aussi être mis en oeuvre sur un réseau annexe qui servira à synchroniser le réseau principal. Bien que principalement applicable aux réseaux où les stations jouent un rôle similaire, il s'étend naturellement aux réseaux non homogènes ou à des ensembles de réseaux.

Les moyens de transmission peuvent demander ou non que les stations soient synchronisées pour pouvoir effectuer les échanges. Dans ce cas, le procédé selon l'invention permet l'entretien de cette synchronisation.

Le procédé s'applique aussi en phase d'acquisition de la synchronisation initiale, procédure propre au moyen de transmission utilisé.

## Revendications

1. Procédé de synchronisation distribuée dans un réseau de communication comportant plusieurs stations (Ni, CCi, SNi, GDi) échangeant entre elles des messages comportant au moins l'étape suivante :

   o insérer dans chaque message transmis par un émetteur d'une station un motif de synchronisation caractéristique de la référence horaire de l'émetteur et incluant l'heure d'émission du message,

   et **caractérisé en ce qu'**il comporte au moins l'étape suivante :

   o mettre à jour la référence horaire d'une première station par la référence horaire d'un message reçu d'une deuxième station du réseau si et seulement si la référence horaire reçue est en avance sur la référence horaire de la première station, la mise à jour se faisant de la manière suivante :

   - calculer la différence $\Delta X = T'a - Ta$ entre l'heure $T'a$ d'émission par la deuxième station du message reçu et l'heure $Ta$ de réception par la première station du même message,
   - appliquer une correction $\Delta Y$ avec $0 < \Delta Y <= \Delta X$ si l'heure $T'a$ d'émission est en avance d'une grandeur au moins $\tau$ avec $\Delta X > \tau > 0$.

2. Procédé selon la revendication 1 **caractérisé en ce que** la correction d'erreur entre les deux stations s'effectue de la manière suivante :

   o sur les liens de synchronisation établis entre les deux stations du réseau, on calcule $T_1 = T'°a - T°a$ l'écart entre l'heure d'émission de la deuxième station et l'heure réception d'un message reçu par la première station à $T°a$ et émis à $T'°a$ par la deuxième station ,
   o la première station corrige $T_1$ des corrections intermédiaires faites depuis $T°a$ et l'instant d'émission $T'a$ par la première station d'un nouveau message, pour obtenir $\Delta T°' = T_1 - corrections$, la première station transmet dans le message $T'a$, $T'°a$ et $\Delta T°'$ vers la deuxième station,
   o la deuxième station corrige $\Delta T°'$ des corrections d'horloge faites entre $T'°a$ et $Ta$ pour obtenir $\Delta T_3$,
   o la deuxième station détermine $\Delta T_2 = T'a - Ta$
   o si $\Delta T_2 - \Delta T_3$ est supérieur à 0, alors la deuxième station corrige l'horloge de la station avec $\Delta T_2 - \Delta T_3$ mesurant le double de l'avance de la première station corrigée des temps de propagation.

3. Procédé selon l'une des revendications 1 ou 2 **caractérisé en ce qu'**une station comprenant une horloge interne ayant une dérive +/-A et le réseau un pilote entretenant cette horloge par l'envoi de top, l'émission des tops est adaptée afin de maintenir la dérive de l'horloge interne dans un intervalle donné [-B ; -B-2A] .

4. Procédé selon la revendication 3 **caractérisé en ce que** l'intervalle est [0 ; 2A].

5. Procédé selon l'une des revendications 1 à 4 **caractérisé en ce que** le réseau est un réseau radio.

6. Application du procédé selon l'une des revendications 1 à 4 à un réseau comportant une ou plusieurs stations en silence radio.

7. Application du procédé selon l'une des revendications 1 à 4 à un réseau disposant d'un GPS sur une ou plusieurs stations, les messages horaires GPS étant traités comme des messages d'heure reçus.

8. Station (Ni, CCi, SNi, GDi) pour la synchronisation distribuée au sein d'un réseau comportant plusieurs stations échangeant entre elles des messages comprenant chacun un motif de synchronisation caractéristique de la référence horaire de la station émettrice du message et incluant l'heure d'émission du message, ladite station comportant au moins l'élément suivant :

   o Une horloge interne (H) pour fournir une référence horaire à la station,
   o Un dispositif (C_E/R) pour recevoir des messages et ayant pour fonction de mesurer leur heure de réception et pour contrôler l'instant d'émission des messages,
   o Un dispositif (Co) de correction de l'heure de l'horloge internne H, pour recevoir les motifs de synchronisation, le dispositif (Co) de correction étant adapté à mettre à jour la référence horaire de l'horloge interne par la référence horaire d'un message reçu d'une autre station si et seulement si la référence horaire du message reçu est en avance sur la référence horaire de l'horloge interne (H):

- en calculant la différence $\Delta X=T'a-Ta$ entre l'heure $T'a$ d'émission du message et l'heure $Ta$ de réception du message par la station, et
- en appliquant une correction $\Delta Y$ avec $0<\Delta Y<=\Delta X$ si l'heure $T'a$ d'émission est en avance d'une grandeur au moins $\tau$ avec $\Delta X>\tau>0$.

9. Station selon la revendication 8 **caractérisé en ce qu'**il comporte une référence horaire externe.

10. Station selon l'une des revendications 8 et 9 **caractérisé en ce qu'**elle est adaptée à faire partie d' un réseau radio.

## Claims

1. Distributed synchronization method in a communication network comprising a number of stations (Ni, CCi, Sni, GDi) exchanging messages between themselves, comprising at least the following step:

   o inserting into each message transmitted by a sender of a station a synchronization pattern characteristic of the clock reference of the sender and including the transmission time of the message and **characterized in that** it comprises at least the following step:

   o updating the clock reference of a first station with the clock reference of a message received from a second station of the network if, and only if, the clock reference received is leading the clock reference of the first station, the update being done as follows:

   o calculating the difference $\Delta X=T'a-Ta$ between the time $T'a$ of sending by the second station of the message received and the time $Ta$ of reception by the first station of the same message,
   o applying a correction $\Delta Y$ where $0<\Delta Y<=\Delta X$ if the time $T'a$ of sending is leading by a quantity of at least $\tau$ with $\Delta X>\tau>0$.

2. Method according to Claim 1, **characterized in that** the error correction between the two stations is performed as follows:

   o on the synchronization links set up between the two stations of the network, $T_1=T'^{\circ}a-T^{\circ}a$ is calculated, being the difference between the time of sending from the second station and the time of reception of a message received by the first station at $T^{\circ}a$ and sent by the second station at $T^{\circ}{}'a$,
o the first station corrects $T_1$ by the intermediate corrections made since $T^{\circ}a$ and the time of sending $T'a$ by the first station of a new message, to obtain $\Delta T^{\circ}{}'=T_1$-corrections, the first station transmits in the message $T'a$, $T'^{\circ}a$ and $\Delta T^{\circ}{}'$ to the second station,
o the second station corrects $\Delta T^{\circ}{}'$ by the clock corrections made between $T'^{\circ}a$ and $Ta$ to obtain $\Delta T_3$,
o the second station determines $\Delta T_2= T'a-Ta$
o if $\Delta T_2- \Delta T_3$ is greater than 0, then the second station corrects the clock of the station with $\Delta T_2-\Delta T_3$ measuring twice the lead of the first station corrected by the propagation times.

3. Method according to one of Claims 1 or 2, **characterized in that** a station comprising an internal clock having a drift +/- A and the network having a driver maintaining this clock by sending pulses, the sending of the pulses is adapted to maintain the drift of the internal clock within a given range [-B; -B-2A] .

4. Method according to Claim 3, **characterized in that** the range is [0; 2A].

5. Method according to one of Claims 1 to 4, **characterized in that** the network is a radio network.

6. Application of the method according to one of Claims 1 to 4 to a network comprising one or more stations in radio silence mode.

7. Application of the method according to one of Claims 1 to 4 to a network having a GPS on one or more stations, the GPS clock messages being treated as received time messages.

8. Distributed synchronization station (Ni, CCi, Sni, GDi) in a network comprising a number of stations exchanging messages between themselves, each comprising a synchronization pattern characteristic of the clock reference of the sender station that sends the message and including the transmission time of the message, the said station comprising at least the following element:

   o an internal clock (H) for delivering a clock reference to the station,
   o a device (C_E/R) for receiving messages and having the function of measuring their time of reception and of controlling the time of sending the messages,

o a device (Co) for correcting the time of the internal clock H, for receiving the synchronization patterns, the correction device (Co) being designed to update the clock reference of the internal clock by the clock reference of a message received from another station if, and only if, the clock reference of the message received is leading the clock reference of the internal clock (H):

- by calculating the difference $\Delta X = T'a - Ta$ between the time $T'a$ of sending the message and the time $Ta$ of reception of the message by the station, and
- by applying a correction $\Delta Y$, where $0 < \Delta Y <= \Delta X$ if the sending time $T'a$ is leading by a quantity of at least $\tau$, where $\Delta X > \tau > 0$.

9. Station according to Claim 8, **characterized in that** it comprises an external clock reference.

10. Station according to one of Claims 8 and 9, **characterized in that** it is designed to form part of a radio network.

**Patentansprüche**

1. Verfahren zur verteilten Synchronisation in einem Kommunikationsnetz, das mehrere Stationen (Ni, CCi, SNi, GDi) umfasst, die untereinander Nachrichten austauschen, umfassend mindestens den folgenden Schritt:

- in jede von einem Sender einer Station gesendete Nachricht Einfügen eines Synchronisationsmotivs, das für den Zeitbezug des Senders charakteristisch ist und die Sendezeit der Nachricht enthält;

und **gekennzeichnet dadurch, dass** es mindestens den folgenden Schritt umfasst:

- Aktualisieren des Zeitbezugs einer ersten Station durch den Zeitbezug einer von einer zweiten Station des Netzes empfangenen Nachricht, wenn und nur wenn der empfangene Zeitbezug vor dem Zeitbezug der ersten Station liegt, wobei die Aktualisierung auf die folgende Weise erfolgt:

- Berechnen der Differenz $\Delta X = T'a - Ta$ zwischen der Sendezeit $T'a$ der empfangenen Nachricht von der zweiten Station und der Zeit $Ta$ des Empfangs derselben Nachricht durch die erste Station,
- Anlegen einer Korrektur $\Delta Y$, wobei $0 < \Delta Y <= \Delta X$, wenn die Sendezeit $T'a$ um

mindestens eine Größe $\tau$, wobei $\Delta X > \tau > 0$, vorher liegt.

2. Verfahren nach Anspruch 1, **dadurch gekennzeichnet, dass** die Korrektur des Fehlers zwischen den beiden Stationen sich auf die folgende Weise auswirkt:

- auf den zwischen den beiden Stationen des Netzes eingerichteten Synchronisationsverbindungen wird $T_1 = T'°a - T°a$ der Abstand zwischen der Sendezeit der zweiten Station und der Empfangszeit einer von der ersten Station bei $T°a$ empfangenen und bei $T'°a$ von der zweiten Station gesendeten Nachricht berechnet;
- die erste Station korrigiert $T_1$ die Zwischenkorrekturen, die seit $T°a$ und dem Sendezeitpunkt $T'a$ einer neuen Nachricht durch die erste Station vorgenommen wurden, um $\Delta T°' = T_1$-Korrekturen zu erhalten, die erste Station sendet in der Nachricht $T'a$, $T'°a$ und $\Delta T°'$ an die zweite Station,
- die zweite Station korrigiert $\Delta T°'$ die Taktkorrekturen, die zwischen $T'°a$ und $Ta$ vorgenommen wurden, um $\Delta T_3$ zu erhalten,
- die zweite Station bestimmt $\Delta T_2 = T'a - Ta$,
- wenn $\Delta T_2 - \Delta T_3$ über 0 ist, korrigiert die zweite Station den Takt der Station, wobei $\Delta T_2 - \Delta T_3$ das Doppelte des Vorsprungs der ersten Station, um die Verbreitungszeit korrigiert, ist.

3. Verfahren nach einem der Ansprüche 1 oder 2, **dadurch gekennzeichnet, dass** eine Station einen internen Takt umfasst, der eine Ableitung $+/-A$ hat, und das Netz einen diesen Takt durch das Senden von Top unterhaltenden Piloten umfasst, wobei die Sendung der Tops so angepasst ist, dass die Ableitung des internen Takts in einem gegebenen Intervall [-B; -B-2A] gehalten wird.

4. Verfahren nach Anspruch 3, **dadurch gekennzeichnet, dass** das Intervall [0; 2A] ist.

5. Verfahren nach einem der Ansprüche 1 bis 4, **dadurch gekennzeichnet, dass** es sich bei dem Netz um ein Funknetz handelt.

6. Anwendung des Verfahrens nach einem der Ansprüche 1 bis 4 auf ein Netz, das eine oder mehrere Stillfunkstationen umfasst.

7. Anwendung des Verfahrens nach einem der Ansprüche 1 bis 4 auf ein Netz, das auf eine oder mehrere Stationen ein GPS anlegt, wobei die GPS-Zeitnachrichten als die empfangenen Zeitnachrichten behandelt werden.

8. Station (Ni, CCi, SNi, GDi) zur verteilten Synchronisation in einem Netz, das mehrere Stationen umfasst, die untereinander Nachrichten austauschen, wobei die Nachrichten jeweils ein Synchronisationsmotiv umfassen, das für den Zeitbezug der Sendestation der Nachricht charakteristisch ist und die Sendezeit der Nachricht enthält, wobei die Station mindestens das folgende Element umfasst:

- einen internen Takt (H), um der Station einen Zeitbezug bereitzustellen;
- eine Vorrichtung (C_E/R) zum Empfangen von Nachrichten und die die Funktion hat, ihre Empfangszeit zu messen und den Sendezeitpunkt der Nachrichten zu steuern,
- eine Vorrichtung (Co) zur Korrektur der Zeit des internen Takts H, um die Synchronisationsmotive zu empfangen, wobei die Korrekturvorrichtung (Co) dazu angepasst ist, den Zeitbezug des internen Takts durch den Zeitbezug einer von einer anderen Station empfangenen Nachricht zu aktualisieren, wenn und nur wenn der Zeitbezug der empfangenen Nachricht vor dem Zeitbezug des internen Takts (H) liegt:
- indem die Differenz $\Delta X = T'a - Ta$ zwischen der Sendezeit $T'a$ der Nachricht und der Empfangszeit $Ta$ der Nachricht von der Station berechnet wird und
- indem eine Korrektur $\Delta Y$, wobei $0 < \Delta Y <= \Delta X$ angelegt wird, wenn die Sendezeit $T'a$ um mindestens eine Größe $\tau$, wobei $\Delta X > \tau > 0$, vorher liegt.

9. Station nach Anspruch 8, **dadurch gekennzeichnet, dass** sie einen externen Zeitbezug umfasst.

10. Station nach einem der Ansprüche 8 und 9, **dadurch gekennzeichnet, dass** sie dazu angepasst ist, Teil eines Funknetzes zu bilden.

Fig. 1

Fig. 2

Fig. 3

Fig. 4

**RÉFÉRENCES CITÉES DANS LA DESCRIPTION**

**Documents brevets cités dans la description**

- US 20040005902 A
- US 200102283 B